(19) Europäisches Patentamt
European Patent Office
Office européen des brevets

(11) Veröffentlichungsnummer: **0 135 651**
**B1**

(12) # EUROPÄISCHE PATENTSCHRIFT

(45) Veröffentlichungstag der Patentschrift: **26.11.86**

(51) Int. Cl.⁴: **C 25 D 13/06**, C 09 D 5/44, C 09 D 3/58

(21) Anmeldenummer: **84103154.5**

(22) Anmeldetag: **22.03.84**

(54) **Verfahren zur Herstellung kathodisch abscheidbarer Kunstharzbindemittel.**

(30) Priorität: **28.03.83 AT 1070/83**

(43) Veröffentlichungstag der Anmeldung:
**03.04.85 Patentblatt 85/14**

(45) Bekanntmachung des Hinweises auf die Patenterteilung:
**26.11.86 Patentblatt 86/48**

(84) Benannte Vertragsstaaten:
**BE CH DE FR GB IT LI NL SE**

(56) Entgegenhaltungen:
**EP-A-0 028 401**
**EP-A-0 028 402**
**EP-A-0 049 369**
**FR-A-2 379 588**

(73) Patentinhaber: **Vianova Kunstharz Aktiengesellschaft, A-8402 Werndorf (AT)**

(72) Erfinder: **Paar, Willibald, Dr., Haberlandtweg 23, A-8045 Graz (AT)**
Erfinder: **Pampouchidis, Georg, Dr., Obere Teichstrasse 31, A-8010 Graz (AT)**
Erfinder: **Hönig, Helmut, Dr., Seebachergasse 10, A-8010 Graz (AT)**

(74) Vertreter: **Pitter, Robert, Dr., Postfach 191 Leechgasse 21, A-8011 Graz (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



LIBER, STOCKHOLM 1986

**Beschreibung**

In der AT-PS 346 989 bzw. der AT-PS 353 369 werden kathodisch abscheidbare Bindemittelkombinationen beschrieben, welche neben der wasserverdünnbaren, durch thermische Polymerisation härtbaren Hauptkomponente eine wasserunlösliche, endständige Doppelbindungen awfweisende Zweitkomponente enthalten, welche gegebenenfalls und unter Beibehaltung der Wasserunlöslichkeit unter den ETL-Verfahrensbedingungen (ETL = Elektrotauchlack) auch basische Stickstoffgruppen aufweisen kann. Vorzugsweise kommen dabei Umsetzungsprodukte von Epoxidharzen zum Einsatz. Die Aufgabe dieser wasserunlöslichen Komponente besteht einerseits darin, aus dem weitgehend wasserlöslichen System der Hauptkomponente ein Bindemittelsystem mit Emulsionscharakter zu machen, wodurch eine Reihe von Filmeigenschaften, wie z. B. Filmaufbau, Umgriff und Oberflächenqualität verbessert und besser beeinflußt werden können. Andererseits können über diese Komponente zusätzliche, zur Vernetzung dienende, polymerisierbare, im wesentlichen end- oder seitenständige äthylenische Doppelbindungen oder andere die Filmeigenschaften beeinflussende Molekülsegmente in das System eingeführt werden.

In der EP 00 28 401 oder der AT-PS 365 214 bzw. in einer Anzahl derzeit och nicht zum Stand der Technik gehörender Anmeldungen werden kationische Oxazolidingruppen enthaltende wasserverdünnbare Bindemittel beschrieben, welche sowohl als Alleinbindemittel oder aufgrund, ihrer günstigen Benetzungseigenschaften in vielen Fällen besonders als Bindemittel zur Herstellung von Pigmentpasten für KETL-Bindemittel eingesetzt werden können.

Es wurde nun gefunden, daß man KETL-Bindemittel (Kathodische Elektrotauchlack-Bindemittel) mit einem besonders günstigen Eigenschaftsbild erhält, wenn in Kombination mit wasserverdünnbaren kathodisch abscheidbaren, selbstvernetzenden Harzen, als zumindest weitgehend wasser unlösliche Teilkomponente, end- oder seitenständige äthylenische Doppelbindungen tragende Derivate von Dioxazolidinen eingesetzt werden.

Die vorliegende Erfindung betrifft demgemäß ein Verfahren zur Herstellung kathodisch abscheidbarer und durch thermische Polymierisation härtbarer Kunstharzbindemittel, bestehend aus einer nach Protonierung der basischen Gruppen zumindest weitgehend wasserlöslichen Komponente (A), welche basische Stickstoffgruppen entsprechend einer Aminzahl von 40 bis 170 mg KOH/g und end, oder seitenständige äthylenische Doppelbindungen entsprechend einer Doppelbindungszahl von mindestens 0,5, vorzugsweise 0,8 bis 2,5 pro 1000 Molekulargewichtseinheiten aufweist und einer unter den ETL-Verfahrensbedingungen im wesentlichen wasserunlöslichen Komponente (B), welches dadurch gekennzeichnet ist, daß als Komponente (B) modifizierte Dioxazolidin- und/oder Di-perhydro-1,3-oxazinverbin-dungen einsetzt, welche die Strukturelemente

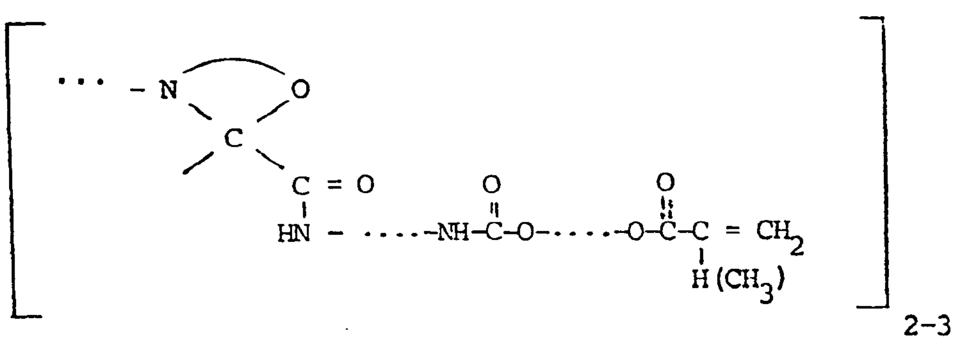

aufweisen, wobei das Strukturelement

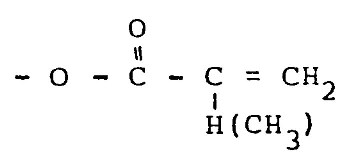

durchschnittlich mindestens einmal pro Molekül vorhanden ist.

Aufgrund ihres Aufbaues und ihrer funktionellen Gruppen bewirkt der Einsatz dieser Komponenten in den KETL-Systemen Verbesserungen in mehrfacher Hinsicht. So wird durch die günstigen Benetzungseigenschaften und die gute emulgierende Wirkung dieser Komponente die Verwendung eines eigenen Pigmentpastenharzes überflüssig, da dessen Funktion von der erfindungsgemäßen Komponente (B) übernommen wird. Überdies bietet der Aufbau dieser Komponente gemäß der vorliegenden Erfindung eine große Zahl von Möglichkeiten, den Schichtaufbau und die Ausbildung der Filmoberfläche nachhaltig zu beeinflussen. Einen weiteren und wesentlichen Vorteil bieten die neuen Zumischkomponenten in bezug auf ihren Einfluß auf die Viskosität der Bindemittelsysteme vor und während der Verdünnung der Harzkombinationen mit Wasser auf den gewünschten Arbeitsfestkörpergehalt. Die viskositätsreduzierende

Wirkung und die damit verbundene Möglichkeit einer Reduzierung des Anteils an organischen Lösungsmitteln in KETL-Systemen gewinnt zunehmend an Bedeutung, wie dies beispielsweise durch die VOC-Vorschriften (volatile organic content) in den USA bereits der Fall ist.

Als wasserverdünnbare, selbstvernetzende Komponente (A) werden vorzugsweise Polykondensations-, Polymerisations- ode Polyadditionsprodukte eingesetzt, wie sie in den vorne erwähnten AT-PSen 346 989 und 353 369 beschrieben werden. Selbstverständlich können auch anders aufgebaute Harze eingesetzt werden, soferne sie bezüglich ihrer Aminzahl bzw. der Anzahl der polymerisierbaren end- oder seitenständigen äthylenischen Doppelbindungen pro 1000 Molekulargewichtseinheiten, wie sie durch die Doppelbindungszahl ausgedrückt wird, den anspruchsgemäß geforderten Kriterien entsprechen.

Bevorzugt werden als Komponente (A) Harze auf der Basis von Bisphenol-A-Epoxidharzen. Diese Harze verleichen in der erfindungsgemäß hergestellten Kombination daraus formulierten Grundierungen in optimaler Weise die Eigenschaften, wie sie beispielsweise von der Automobilindustrie gefordert werden.

Gemäß der vorliegenden Erfindung werden als Komponente (B) modifizierte Dioxazolidin- oder Di-perhydro-1,3-oxazinver-bindungen, welche durchschnittlich eine end- oder seitenständige äthylenische Doppelbindung pro Molekül aufweisen, eingesetzt. Die Verfahren zur Herstellung dieser Verbindungen beruhen auf der Beobachtung, daß die zwischen dem Stickstoffatom und dem Sauerstoffatom des Oxazolidin-5-ringes bzw. des entsprechenden 6-Ringes liegende Methylengruppe derart aktiviert ist, daß eines ihrer Wasserstoffatome zur Reaktion mit einer Isocyanatgruppe befähigt ist. Auf diese Weise wird neben der gewünschten Vernetzungsfunktion auch eine Carbamidgruppe eingeführt, welche wesentlich zur Verbesserung der Hartungseigenschaften der kathodisch abgeschiedenen Filme beiträgt.

Die modifizierten Dioxazolidine, welche die Komponente (B) der erfindungsgemäß hergestellten Bindemittelkombination darstellen, werden durch Umsetzung von Dioxazolidinen bzw. Di-perhydro-1,3-oxazinen mit ungesättigten Monoisocyanaten erhalten. Zu den letzteren zählen beispielsweise die bevorzügt eingesetzten Umsetzungsprodukte auf äquimolaren Mengen eines Diisocyanats und eines Hydroxy(meth)acrylats.Die Herstellung solcher ungesättigter Monoisocyanate ist z. B. in der AT-PS 342 168 beschrieben. Für die vorliegende Erfindung werden Umsetzungsprodukte von Toluylendiisocyanat und Monoestern der (Meth)acrylsäure mit $C_2$-$C_4$-Diolen besonders bevorzugt.

Der Aufbau der Komponente (B) kann schematisch in folgender Weise dargestellt werden, wobei entweder die 5-Ringverbindung (Oxazolidine) oder eine 6-Ringverbindung (Di-perhydro-1,3-oxazine) als Ringelement stehen kann. (In der vorliegenden Anmeidung wird - soferne dies chemisch möglich ist - die Perhydro-1,3-oxazin-Struktur immer miteingeschlossen, wenn von Oxazolidingruppen die Rede ist):

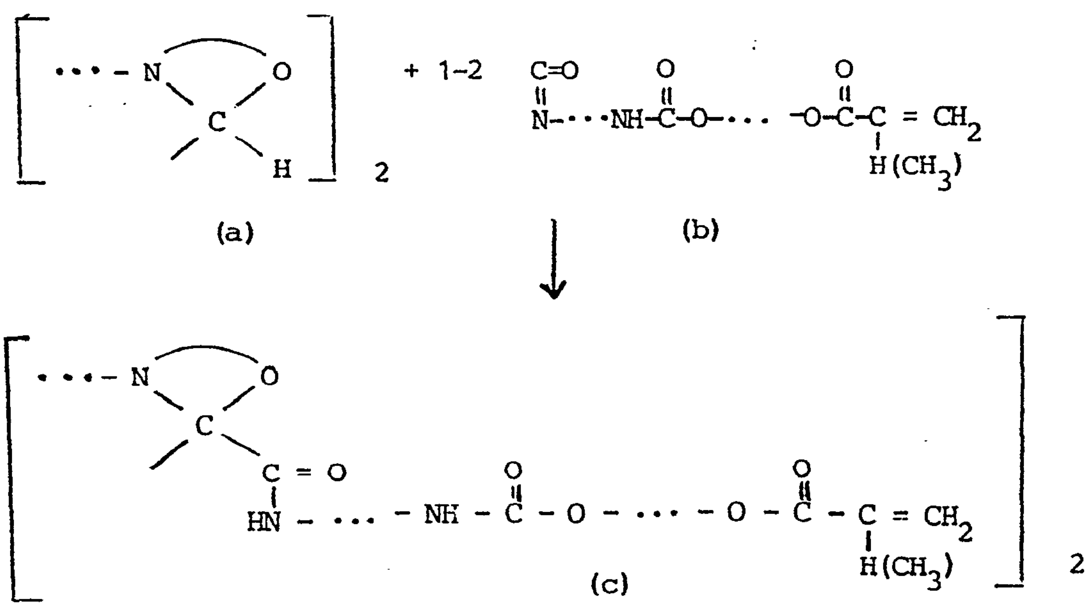

(a) (b)

(c)

Die Umsetzung erfolgt in der Weise, daß die Di-Ringverbindung (a) in einem inerten Lösungsmittel, wie Xylol oder MIBK, gelöst und auf 50 - 80°C erwärmt wird. Unter Berücksichtigung.einer gegebenenfalls auftretenden Exothermie wird das ungesättigte Monoisocyanat (b) zugegeben und die Reaktion bei der angegebenen Temperatur bis zu einem NCO-Wert von weniger als 0,1 % geführt. Das Endprodukt (c) kann zur besseren Weitrverarbeitung gegebenenfalls mit weiterem Lösungsmittel verdünnt Werden (z. B. Glykoläthern etc.).

Die Herstellung der für die Umsetzung mit den ungesättigten Monoisocyanatverbindungen geeigneten Dioxazolidine bzw. Perhydro-1,3-oxazine kann in verschiedener Weise erfolgen:

(I) Durch Umsetzung primärer Diamine mit 2 Mol einer Monoepoxidverbindung und Ringschluß mittels 2 Mol eines Aldehyds werden die gewünschten Verhindungen gemäß folgender Reaktion erhalten:

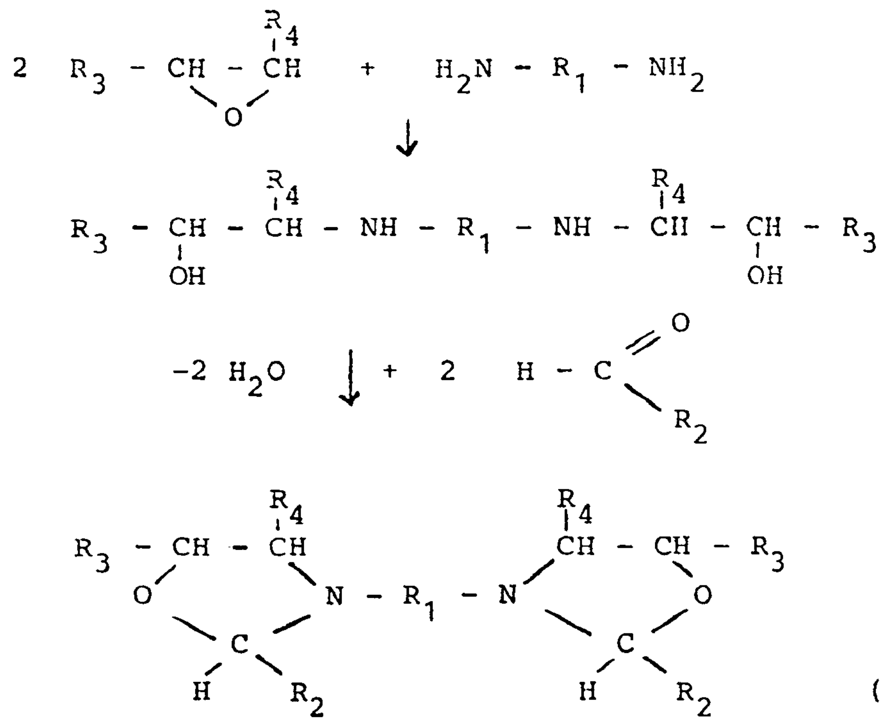


(FORMEL I)

Die angegebenen Reste können dabei folgende Bedeutung haben.

$R_1$ = einen geradkettigen oder verzweigten oder cyclischen Alkylenrest mit 2 bis 12 C-Atomen oder einen Aralkylenrest,

$R_2$ = einen geradkettigen oder verzweigten Alkylrest mit 1 bis 4 C-Atomen oder ein H-Atom oder einen gegebenenfalls substituierten Arylrest,

$R_3$ = einen gesättigten oder ungesättigten, gegebenenfalls Äther- oder Estergruppierungen enthaltenden aliphatischen oder cycloaliphatischen oder aromatischen Kohlenwasserstoffrest,

$R_4$ = H oder $CH_3$.

Wird anstelle des Diamins ein Dialkylentriamin verwendet, so wird die im Rest $R_1$ verbleibende sekundäre Aminogruppe mit einer Acrylverbindung, z. B. einem Acrylester oder Acrylamid im Sinne einer MICHAEL-Addition blockiert.

(II) Alkylamino-β- oder γ-hydroxyalkylamine können mit 1 Mol Monoepoxid und 2 Mol Aldehyd ebenfalls zu Verbindungen der gewünschten Struktur umgesetzt werden:

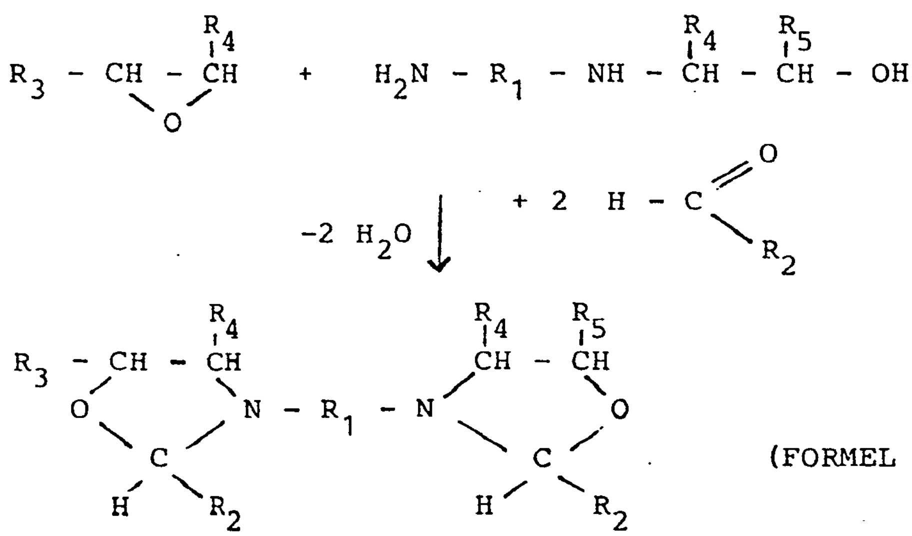


(FORMEL II)

wobei $R_5$ ein Wasserstoffatom oder einen Alkylrest darstellt. Bei Verwendung eines entsprechenden Alkylamino-γ-hydroxyalkylamins entsteht eine Verbindung, welche einen 6-Ring (Perhydro-1,3-oxazin-Struktur) aufweist.

(III) Eine weitere Gruppe von Dioxazolidinen kann durch Umsetzung von 2 Mol eines gegebenenfalls

substituierten Hydroxyoxazolidins mit 1 Mol eines Diisocyanats erhalten werden. Beispiele für entsprechende Hydroxyoxazolidine sind nachstehend angeführt:

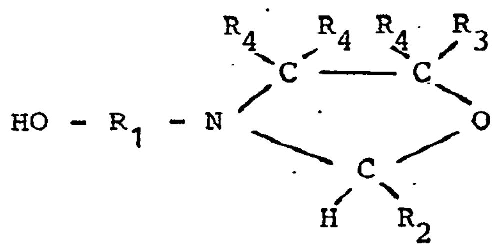

(FORMEL III A)

hergestellt durch Umsetzung eines prim. Alkanolamins mit einer monoepoxidverbindung und einem Aldehyd. Beim Einsatz von primären β- oder γ-Hydroxyalkylaminen entstehen dabei auch Oxazolidine der Formel

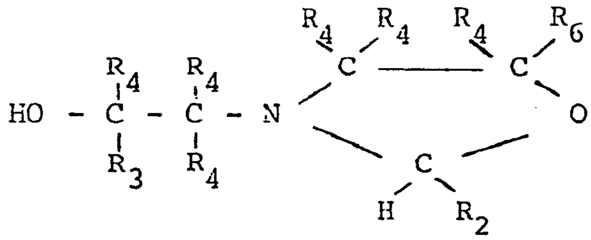

(FORMEL III B)

$R_6 = R_4$, ein Alkyl- oder ein Phenylrest
oder die entsprechende 6-Ringverbindung;
Hydroxyoxazolidine der Formel

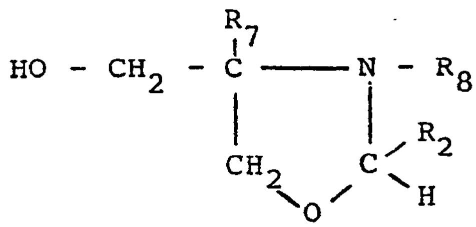

(FORMEL III C)

wobei
$R_7$ = ein Wasserstoffatom oder einen geradkettigen oder verzweigten oder cyclischen Alkylrest mit 2 bis 12 C-Atomen,
$R_8$ = einen nach Reaktion mit dem am Stickstoff befindlichen aktiven Wasserstoffatom verbleibenden Rest eines in bezug auf die Doppelbindung monofunktionalen Acryl- oder Methacrylmonomeren,
bedeutet, können durch Umsetzung von 2-Aminopropandiol-1,3 in erster Stufe mit einem (Meth)acrylester und weiters einem Aldehyd erhalten werden.

Weitere Hydroxyoxazolidine bzw. die entsprechenden 6-Ringe können auch durch Umsetzung aus einem primären β- oderγ-Hydroxymonoamin, einem Hydroxy(meth)acrylat und einem Aldehyd

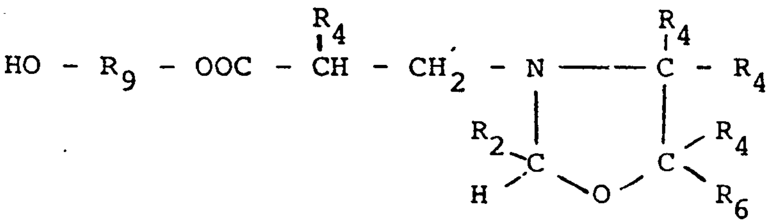

(FORMEL III D)

wobei
$R_9$ = einen geradkettigen oder verzweigten Alkylen- oder Polyalkylenätherrest bedeutet
oder aus Dialkanolaminen und Aldehyden:

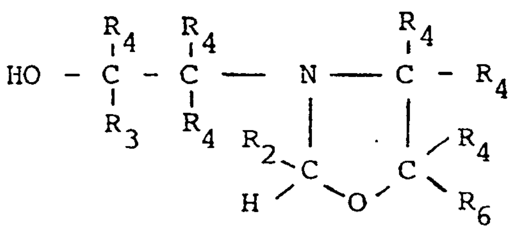

(FORMEL III E)

erhalten werden.

Die gemäß den in (III) angegebenen Hydroxyoxazolidine können auch mit Diisocyanaten im äquimolaren Verhältnis umgesetzt werden, wodurch Monoisocyanatverbindungen resultieren, welche in einer weiteren Stufe mit Diolen zu Dioxazolidinen oder mit Polyolen zu Polyoxazolidinen umgesetzt werden. Es ist klar, daß auch diese Polyoxazolidine der Umsetzung mit ungesättigten Isocyanaten im Sinne der vorliegenden Erfindung zugänglich sind.

Beispiele für die einzelnen Vertreter der angeführten Verbindungen werden im experimentellen Teil angegeben.

Die Herstellung der erfindungsgemäßen Bindemittel erfolgt durch Mischung der beiden Komponenten bei Temperaturen, bei welchen eine einwandfreie Homogenisierung gewährleistet ist.

Die beiden Komponenten werden in einem Verhältnis von 98-50 Gew.-%, vorzugsweise 95 - 60 Gew.-% der Komponente (A) und 2 - 50 Gew.-%, vorzugsweise 5 - 40 Gew.-% der Komponente (B) kombiniert.

Gegebenenfalls kann eine der Komponenten als Dispergiermedium für die Pigmente etc. herangezogen werden und die Mischung erst anschließend vorgenommen werden. Nach Zusatz der zur Erzielung der Wasserverdünnbarkeit notwendigen Neutralisationssäure wird der Ansatz auf die Verarbeitungsviskosität mit deionisiertem Wasser verdünnt. Die Formulierung von ETL-Lacken sowie die Bedingungen für die Abscheidung sind dem Fachmann so bekannt, daß darauf nicht mehr näher eingegangen werden muß.

Die Vernetzung der kathodisch abgeschiedenen Filme erfolgt bei 130 - 190°C, vorzugsweise bei 150 - 180°C. Diese Bedingungen gelten auch für Beschichtungen, welche in anderer Weise, z. B. durch Tauchen oder Spritzen bei entsprechender Formulierung der Lacke aufgebracht wurden.

Die folgenden Beispiele erläutern die Erfindung, ohne sie in ihrem Umfang zu beschränken. Alle Angaben in Teilen oder Prozenten beziehen sich, soweit nicht anders angegeben, auf Gewichtseinheiten.

In den Beispielen werden die folgenden Abkürzungen verwendet:

AEGLAC Äthylglykolacetat
HMDA Hexamethylendiamin
IPDA Isophorondiamin
TCDA Tricyclodecandiamin
AEEA Aminoäthyläthanolamin
APEA Aminopropyläthanolamin
MOLA Monoäthanolamin

MPA Monopropanolamin
MIPA Monoisopropanolamin
DIPA Diisopropanolamin
AEPD Aminoäthylpropandiol
DOLA Diäthanolamin
MIBK Methylisobutylketon
CE Glycidylester von $C_9$-$C_{11}$-Monocarbonsäuren
AGE Allylglycidyläther
EHGE 2-Äthylhexylglycidyläther
PGE Phenylglycidyläther
EHA 2-Äthylhexylacrylat
BUA n-Butylacrylat
HEMA Hydroxyäthylmethacrylat
HEA Hydroxyäthylacrylat
FA Paraformaldehyd 91 %
BZA Benzaldehyd
ANA Anisaldehyd
TDI Toluylendiisocyanat (handelsübliches Isomerengemisch)
IPDI Isopherondiisocyanat
HMDI 1,6-Hexamethylendiisocyanat
HD 1,6-Hexandiol
PEG Polyäthylenglykol (MG ca 300)
TMP Trimethylolpropan
GL Glycerin
BA Bisphenol A umgesetzt mit 2 Mol Propylenoxid
EG Monoäthylenglykol
BMI Basisches Monoisocyanat aus 1 Mol TDI und 1 Mol Diäthyläthanolamin
DBZ Doppelbindungszahl (Anzahl der end- oder seitenständigen Doppelbindungen pro 1000 Molekulargewichtseinheiten)
BNZ Anzahl der basischen Gruppierungen pro 1000 Molekulargewichtseinheiten

**1. Herstellung der erfindungsgemäß eingesetzten Di- und Polyoxazolidine bzw. -perhydro-1,3-oxazine**

Die Zusammensetzung der verschiedenen in den Beispielen eingesetzten Zwischenprodukte ist in Tabelle 1 zusammengefaßt.

a) 1Produkte gemäß Formel (I) und (II) $> 1$

Die Monoepoxidverbindung wird innerhalb einer Stunde dem in einem geeigneten Reaktionsgefäß vorgelegten Amin bei 60 bis 120° C zugegeben (Phase 1) und anschließend bei einer Temperatur von 90 - 130° C während 1 - 3 Stunden die Reaktion vervollständigt (Phase 2). Nach Kühlen auf 70 - 80° C wird der Aldehyd und das Kreislaufmittel (Spezialbenzin mit einem Siedebereich zwischen 80 und 120°C oder ein ähnlicher Benzinkohlenwasserstoff) zugegeben und die sich einstellende Kreislauftemperatur solange gehalten, bis die theoretische Wassermenge abgeschieden ist. Anschließend wird das Kreislaufmittel im Vakuum abgezogen.

**Produkte gemäß Formel (III A) - (III E)**

Hydroxyoxazolidine gemäß Formel (III E) werden,wie in der EP 00 28 401 angegeben, durch Umsetzung des Dialkanolamins mit dem Aldehyd unter Verwendung eines Kreis laufmittels zur Abtrennung des Reaktionswassers bei ca. 120°C hergestellt. Die Herstellung der Produkte gemäß Formel (III A und B) erfolgt in der Weise, wie sie im obengenangeführten Punkt (a) angegeben ist. Die Ringschlußreaktion kann auch bei einer Mischung verschiedener Amine erfolgen, wodurch gegebenenfalls erwünschte Mischungen verschiedener Ringverbindungen erhalten werden.

Zur Herstellung der Hydroxyoxazolidine gemäß Formeln (III C mit III D)werden in erster Stufe die Aminopropandiole bzw. die Hydroxymonoamine mit dem Acrylat 2 Stunden bei 80 bis 100°C reagiert. Bei Verwendung von Methacrylaten wird vorteilhafterweise die Reaktionstemperatur auf etwa 140°C erhöht. Anschließend wird bei 70 bis 80°C die Carbonylverbindung (sowie gegebenenfalls eingesetztes Dialkanolamin) und ein geeignetes Azeotropkreislaufmittel (vorzugsweise Spezialbenzin mit einem Siedebereich zwischen 80 und 120°C oder ein ähnlicher aliphatischer Kohlenwasserstoff) zugegeben. Die sich einstellende Kreislauftemperatur wird solange gehalten, bis die berechnete Reaktionswassermenge abgeschieden ist. Das Kreislaufmittel wird dann durch Anlegen von Vakuum abgezogen.

Die gemäß den oben angegebenen Methoden hergestellten Hydroxyoxazolidine werden innerhalb 30

Minuten einer Lösung des Isocyanats in einem inerten Lösungsmittel, vorzugsweise AEGLAC bei guter Kühlung zugegeben; die Temperatur darf dabei 30° C nicht überschreiten. Die Reaktion wird bis zu einem NCO-Wert von praktisch 0 geführt.

In gleicher Weise werden die Oxazolidinmonoisocyanate hergestellt, wobei die Reaktion nur bis zum eirechneten NCO-Wert geführt wird. Die weitere Umsetzung mit den Di- bzw. Polyolen erfolgt anschließend bei 30 - 60° C bis zu einem NCO-Wert von praktisch 0.

**2. Herstellung der polymerisierbaren Monoisocyanat-Vorprodukte**

In einem isocyanatinerten Lösungsmittel (Äthylglykolacetat, MIBK) wird 1 Mol des Diisocyanats vorgelegt und das Hydroxyacrylat (1 Mol) gemischt mit 0,2 % Hydrochinon bei 30 - 40°C innerhalb einer Stunde zugegeben. Die Reaktion wird bei 60 - 80°C bis zum berechneten NCO-Wert geführt. Die Menge des Lösungsmittels wird so gewählt, daß das Vorprodukt mit 50 - 80% Festkörpergehalt anfällt.

In den Beispielen werden folgende ungesättigte Isocyanatvorprodukte eingesetzt:

UMI 1: TDI - HEA

UMI 2: TDI - HEMA

UMI 3: TDI - Hydroxypropylacrylat

**3. Herstellung der erfindungsgemäß eingesetzten Komponente (B)**

In der Tabelle 2 sind die Zusammensetzungen und Kennzahlen für eine Reihe von Komponenten (B) auf Basis ver schiedener Dioxazolidine angegeben.

Die Herstellung der Komponente (B) erfolgt in der Weise, daß das Dioxazolidin in einem Inertlösungsmittel (Xylol, MIBK; Festkörpergehalt der Komponente (B): ca. 80 %) gelöst wird. Der Lösung wird bei 50 - 80° C unter Berücksichtigung auftretender Exothermie das ungesättigte Isocyanatvorprodukt zugegeben und die Reaktion bis zu einem NCO-Wert von praktisch 0 geführt. Bei Bedarf kann das Reaktionsprodukt mit weiterem Lösungsmittel, z. B. Glykoläthern weiter verdünnt werden.

**4. Herstellung der erfindungsgemäßen Bindemittelkombinationen.**

Gemäß den Angaben in Tabelle 3 werden Kombinationen aus den Komponenten (A) und (B) hergestellt, welche nach Zusatz der angegebenen Säuremenge mit Wasser verdünnt werden können. In der Tabelle ist weiters der resultierende pH-Wert einer 10%igen Lösung angegeben. In der Spalte "Stabilität" wird der maximale Prozentgehalt an Bindemittel in einer wäßrigen Emulsion angegeben, bei welchem eine stabile, niedrigviskose Emulsion vorliegt, wenn von einer 85%igen Harzkombination (in organischem Lösungsmittel) ausgegangen wird. Dieser Wert ist von besonderer Bedeutung für den Nachfüllvorgang bei kontinuierlich betriebenen ETL-Anlagen.

Die Herstellung der Emulsionen erfolgt zweckmäßig durch Zugabe der neutralisierten Harzlösung unter Rühren zur gewünschten, auf ca. 60°C erwärmten Wassermenge. Auf diese Weise kann der Gehalt an organischem Lösungsmittel besonders niedrig gehalten Werden (VOC-Vorschriften).

Als selbstvernetzende wasserlösliche Komponente (A) wurden in den Beispielen folgende Produkte eingesetzt:

A1) In einem mit Rührer, Thermometer und Rückflußkühler ausgestatteten Reaktionsgefäß werden 1000 g eines Epoxidharzes auf Bisphenol A-Basis (Epoxy-Äquivalent ca. 500) in 492 g AEGLAC bei 60 bis 70°C gelöst, 0,2 Hydrochinon und 144 g Acrylsäure zugegeben und die Temperatur auf 100 bis 110°C gesteigert. Die Reaktion wird bei dieser Temperatur bis zu eine Säurezahl von unter 5 mg KOH/g geführt (DBZ = 1,75). Anschließend wird das Reaktionsprodukt bei 60 bis 70° C mit 652 g BMI (70 %) versetzt und bis zu einem NCO-Wert von praktisch 0 reagiert (DBZ = 1,25, BNZ = 1,1).

A2) 520 g eines Epoxidharzes auf Bisphenol A-Basis (Epoxy-Äquivalent ca. 260) werden in 465 g AEGLAC gelöst und wie in (AI) mit 564 g eines Halbesters aus Tetrahydrophthalsäureanhydrid und Hydroxyäthylmethacrylat umgesetzt (DBZ = 1,85). Das Reaktionsprodukt wird weiter mit 750 g BMI (70 %) wie bei (A1) umgesetzt (DBZ = 1,24, BNZ = 1,24).

A3) 1000 g eines Epoxidharzes (Epoxy-Äquivalent ca. 500) wird wie bei (AI) mit 86,5 g Acrylsäure und 224 g dehydratisierte Rizinusölfettsäure und anschließend mit 652 g BMI (70 %) umgesetzt (DBZ = 0,68; BNZ = 0,99).

A4) Zu einer Lösung von 1000 g eines Epoxidharzes auf Bisphenol A-Basis (Epoxy-Äquivalent ca. 500) in 520 g AEGLAC wird bei 100 bis 110°C während 1 Stunde 210 g Diäthanolamin zugetropft. Anschließend wird auf 150°C erhitzt und 1 weitere Stunde reagiert. In weiterer Folge wird das Reaktionsprodukt bei 60 bis 70° C mit 652 g UMI (70 %) bis zu einem NCO-Wert von praktisch 0 umgesetzt (DBZ = 0,90, BNZ = 1,20).

Tabelle 1

| Komp. | Diamin | (Di)Alkanol-amin | Aminoalkyl-alkanolamin | Monoepoxid | (Meth)-acrylat | Aldehyd | Diisocyanat | Di-(Poly)ol |
|---|---|---|---|---|---|---|---|---|
| OX 1 | 116 HMDA | | | 480 CE | | 66 FA | | |
| OX 2 | 170 IPDA | | | 228 AGE | | 212 BZA | | |
| OX 3 | 194 TCDA | | | 186 EHGE | | 66 FA | | |
| OX 4 | | | 104 AEEA | 240 CE | | 66 FA | | |
| OX 5 | | | 118 APEA | 150 PGE | | 212 BZA | | |
| OX 6 | | 122 MOLA | | 480 CE | | 66 FA | 174 TDI | |
| OX 7 | | 150 MPA | | 228 AGE | | 212 BZA | 222 IPDI | |
| OX 8 | | 133 DIPA<br>75 MIPA | | 240 CE | | 272 ANA | 168 HMDI | |
| OX 9 | | 238 AEPD | | | 368 EHA | 66 FA | 174 TDI | |
| OX 10 | | 119 AEPD<br>105 DOLA | | | 128 BUA | 212 BZA | 222 IPDI | |
| OX 11 | | 150 MIPA | | | 260 HEMA | 66 FA | 174 TDI | |
| OX 12 | | 150 MPA | | | 228 HEA | 272 ANA | 222 IPDI | |
| OX 13 | | 238 AEPD | | | 368 EHA | 66 FA | 348 TDI | 118 HD |
| OX 14 | | 105 DOLA<br>61 MOLA | | 240 CE | | 212 BZA | 222 IPDI | 150 PEG<br>44 TMP |
| OX 15 | | 150 MPA | | | 228 HEA | 272 ANA | 348 TDI | 59 HD<br>31 GL |
| OX 16 | | 122 MOLA | | 300 PGE | | 66 FA | 336 HMDI | 172 BA<br>31 EG |

Tabelle 2

| Bindemittel | ungesättigtes Monoisocyanat | Di (Tri)-Oxazolidin | Mol UMI/Mol OX | DBZ | AZ |
|---|---|---|---|---|---|
| B 1 | 522 UMI 1 | 836 OX 12 | 0,9 | 1,33 | 82 |
| B 2 | 365 UMI 3 | 404 OX 3 | 0,6 | 1,56 | 146 |
| B 3 | 486 UMI 2 | 776 OX 7 | 0,8 | 1,27 | 89 |
| B 4 | 580 UMI 1 | 998 OX 14 | 1,0 | 1,27 | 71 |
| B 5 | 365 UMI 2 | 804 OX 9 | 0,6 | 1,03 | 96 |
| B 6 | 486 UMI 3 | 620 OX 1 | 0,8 | 1,45 | 101 |
| B 7 | 456 UMI 2 | 1096 OX 13 | 0,75 | 0,97 | 72 |
| B 8 | 580 UMI 1 | 750 OX 10 | 1,0 | 1,50 | 84 |
| B 9 | 522 UMI 1 | 574 OX 2 | 0,9 | 1,64 | 102 |
| B 10 | 365 UMI 3 | 800 OX 6 | 0,6 | 1,03 | 96 |
| B 11 | 608 UMI 2 | 1052 OX 15 | 1,0 | 1,20 | 67 |
| B 12 | 290 UMI 1 | 368 OX 4 | 0,5 | 1,52 | 170 |
| B 13 | 426 UMI 2 | 608 OX 11 | 0,7 | 1,35 | 108 |
| B 14 | 547 UMI 3 | 927 OX 16 | 0,9 | 1,22 | 76 |
| B 15 | 365 UMI 2 | 444 OX 5 | 0,6 | 1,48 | 138 |
| B 16 | 608 UMI 2 | 852 OX 8 | 1,0 | 1,32 | 74 |

Tabelle 3

| Beispiel Nr. | Harz A 100 FH | Harz B Teil FH | Neutr. (mMol Sre./ 100 FH) | pH | Stabilität |
|---|---|---|---|---|---|
| 1 | A 1 | 30 B 10 | 35 | 6,2 | 40 |
| 2 | A 1 | 15 B 7 | 40 | 5,8 | 36 |
| 3 | A 1 | 20 B 12 | 35 | 6,3 | 38 |
| 4 | A 1 | 25 B 4 | 45 | 5,7 | 42 |
| 5 | A 2 | 20 B 15 | 30 | 6,2 | 44 |
| 6 | A 2 | 20 B 2 | 50 | 5,5 | 36 |
| 7 | A 2 | 25 B 6 | 45 | 5,8 | 36 |
| 8 | A 2 | 25 B 9 | 35 | 5,7 | 38 |
| 9 | A 3 | 30 B 1 | 40 | 6,0 | 42 |
| 10 | A 3 | 15 B 16 | 40 | 6,0 | 40 |
| 11 | A 3 | 20 B 5 | 45 | 5,8 | 38 |
| 12 | A 3 | 20 B 14 | 35 | 6,3 | 42 |
| 13 | A 4 | 20 B 8 | 40 | 5,7 | 38 |
| 14 | A 4 | 25 B 13 | 30 | 6,1 | 38 |
| 15 | A 4 | 25 B 3 | 35 | 5,9 | 42 |
| 16 | A 4 | 30 B 11 | 35 | 6,0 | 40 |

**Patentansprüche**

1. Verfahren zur Herstellung kathodisch abscheidbarer und durch thermische Polymerisation härtbarer Kunstharzbindemittel, bestehend aus einer nach Protonierung der basischen Gruppen zumindest weitgehend wasserlöslichen Komponente (A), welche basische Stickstoffgruppen entsprechend einer Aminzahl von 40 bis 170 mg KOH/g und end- oder seitenständige äthylenische Doppelbindungen entsprechend einer Doppelbindungszahl von mindestens 0,5, vorzugsweise 0,8 bis 2,5 pro 1000 Molekulargewichts einheiten aufweist und einer unter den Elektrotauchlack-Verfahrensbedingungen im wesentlichen wasserunlöslichen Komponente (B), dadurch gekennzeichnet, daß man als Komponente (B) modifizierte Dioxazolidin- und/oder Di-perhydro-1,3-oxazinverbinndungen einsetzt, welche die Strukturelemente

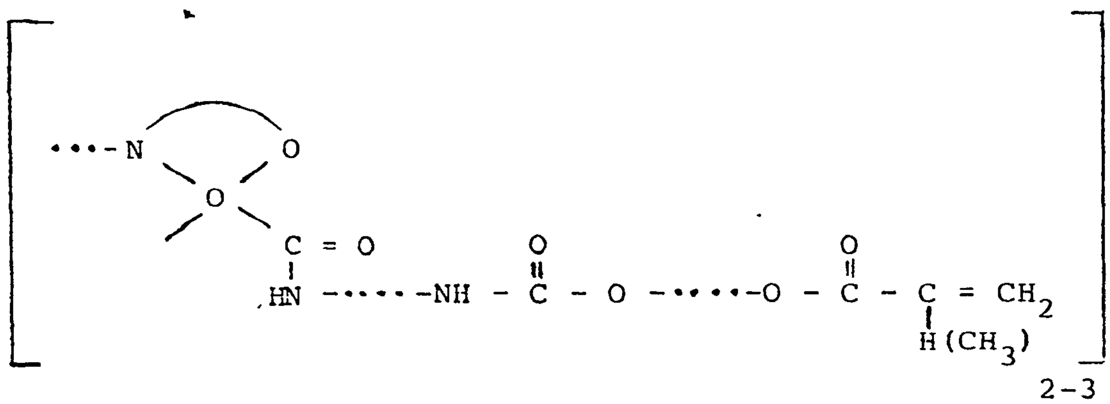

aufweisen, wobei das Strukturelement

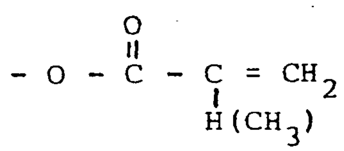

durchschnittlich mindestens einmal pro Molekül vorhanden ist.

2. Verfahren nach Anspruch 1, dadurch gekennzeichnet, daß als Komponente (A) Umsetzungsprodukte von Epoxidharzen auf der Basis von Bisphenol A eingesetzt werden.

3. Verfahren nach den Ansprüchen 1 und 2, dadurch gekennzeichnet, daß man die als Komponente (B) eingesetzten Verbindungen durch Umsetzung von Oxazolidin- und/oder Perhydro-1,3-oxazinverbindungen mit ungesättigten Monoisocyanatverbindungen, welche eine end- oder seitenständige äthylenische Doppelbindung aufweisen, herstellt.

4. Verfahren nach Anspruch 3, dadurch gekennzeichnet, daß als ungesättigte Monoisocyanatverbindungen Umsetzungsprodukte aus Diisocyanaten, vorzugsweise Toluylendiisocyanat und Hydroxy(meth)acrylaten eingesetzt werden.

5. Verfahren nach den Ansprüchen 1 bis 4, dadurch gekennzeichnet, daß die Komponenten (A) und (B) in einem Verhältnis von 98 - 50 Gew.-% der Komponente (A) zu 2 - 50 Gew.-% der Komponente (B) eingesetzt werden.

6. Verfahren nach den Ansprüchen 1 bis 4, dadurch gekennzeichnet, daß die Komponenten (A) und (B) im Verhältnis von 95 - 60 Gew.-% der Komponente (A) zu 5 - 40 Gew.-% der Komponente (B) eingesetzt werden.

7. Verwendung der gemäß den Ansprüchen 1 bis 6 hergestellten Bindemittel zur Formulierung, insbesonders für das Elektrotauchlack-Verfahren geeigneter Überzugsmittel.

8. Verfahren zur Herstellung von Überzugsmitteln aus den gemäß den Ansprüchen 1 bis 6 hergestellten Bindemitteln, dadurch gekennzeichnet, daß die Komponente (B) als Medium für die Herstellung der Pigmentpaste benutzt wird und die Komponente (A) als Klarlack zur Komplettierung des Überzugsmittels eingesetzt wird.

**Claims**

1. Process for producing cathodically depositable synthetic resin binders hardenable by thermic polymerisation, consisting of a component (A) at least substantially water soluble upon protonation of the basic groups, carrying basic nitrogen groups according to an amine value of from 40 to 170 mg KOH/g and chain end or side chain ethylenically unsaturated double bonds according to a double bond number of at least

0.5, preferably 0.8 to 2.5 per 1000 molecular weight units, and of a component (B) substantially water insoluble under the conditions of electrodeposition, characterised in that as component (B) modified dioxazolidine and/or di-perhydro-1,3-oxazine compounds are used which carry the structural elements

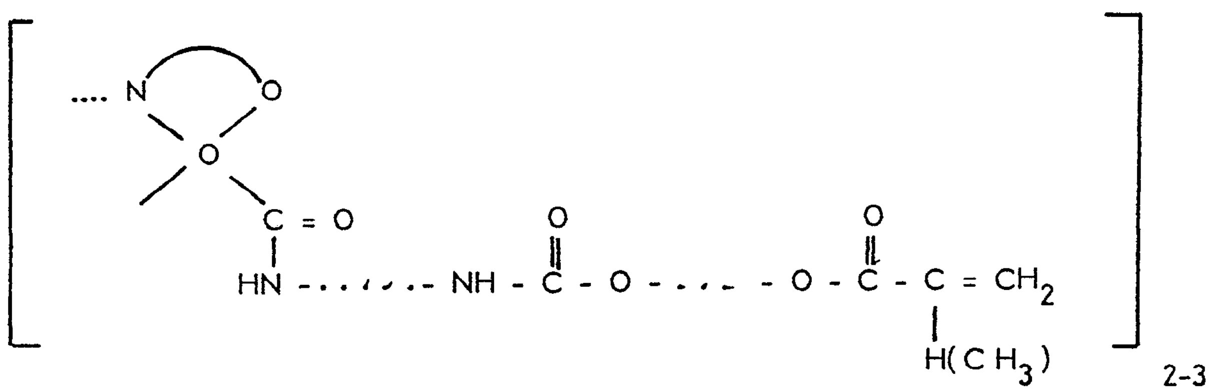

wherein the structural element

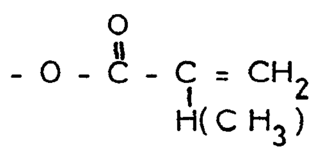

is present in the molecule at an average of at least 1.

2. Process according to claim 1, characterised in that component (A) is a reaction product of an epoxy resin based on bisphenol A.

3. Process according to claims 1 and 2, characterised in that the compounds used as component (B) are obtained through reaction of oxazolidine and/or perhydro-1,3-oxazine compounds with unsaturated monoisocyanate compounds carrying one chain end or side chain ethylenically unsaturated double bond.

4. Process according to claim 3, characterised in that the unsaturated monoisocyanate compounds are reaction products of diisocyanates, preferably toluylene diisocyanate and hydroxy(meth)acrylates.

5. Process according to claims 1 to 4, characterised in that components (A) and (B) are used in a ratio of from 98 to 50 % by weight of component (A) to 2 to 50 % by weight of component (B).

6. Process according to claims 1 to 4, characterised in that components (A) and (B) are used in a ratio of from 95 to 60 % by weight of component (A) to 5 to 40 % of component (B).

7. Use of the binders produced according to claims 1 to 6 for the formulation of coating compositions, particularly for the electrodeposition process.

8. Process for producing coating compositions based on the binders produced according to claims 1 to 6, characterised in that component (B) is used as medium for the production of the pigment paste and that component (A) is used as clear varnish to complete the coating composition.

**Revendications**

1. Procédé pour la préparation de liants du type résine synthétique déposables cathodiquement et durcissables par polymérisation thermique, consistant en un composant (A) pour le moins essentiellement soluble dans l'eau après protonation des groupes basiques, qui présente des groupes azote basiques correspondant à un indice d'amine de 40 à 170 mg de ROH/g et des doubles liaisons éthyleniques en position terminale ou latérale correspondant à un indice de double liaison d'au moins 0,5, de préférence de 0,8 à 2,5 pour 1000 unités de poids moléculaire et un composant (B) essentiellement insoluble dans l'eau dans les conditions du procédé ETL (peinture électrophorétique), lequel procédé est caractérisé en ce que l'on fait intervenir en tant que composant (B) des composés modifiés de dioxazolidine et/ou de di-perhydro-1,3-oxazine, lesquels présentent les éléments de structure:

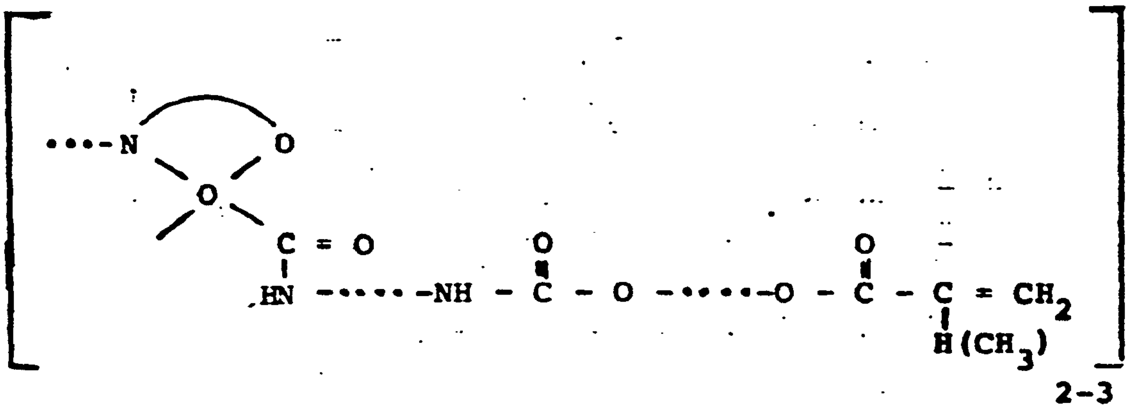

l'élément de structure

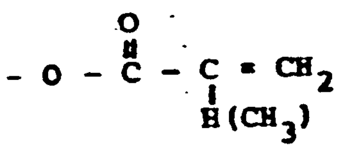

étant présent en moyenne au moins une fois par molécule.

2. Procédé selon la revendication 1, caractérisé en ce que l'on met en oeuvre en tant que composant (A) des produits réactionnels de résines époxy à base de bisphénol A.

3. Procédé selon les revendications 1 et 2, caractérisé en ce que l'on prépare les composés mis en oeuvre en tant que composant (B) par réaction des composés d'oxazolidine et/ou de perhydro-1,3-oxazine avec des composés de monoisocyanate non saturés, lesquels présentent une double liaison éthylénique en position terminale ou latérale.

4. Procédé selon la revendication 3, caractérisé en ce que l'on met en oeuvre en tant que composés de monoisocyanate non saturés des produits réactionnels obtenus à partir de diisocyanates, de préférence du diisocyanate de toluylène et d'hydroxyméthacrylates.

5. Procédé selon les revendications 1 à 4, caractérisé en ce que les composants (A) et (B) sont mis en oeuvre dans un rapport de 98-50% en poids du composant (A) pour 2-50% en poids du composant (B).

6. Procédé selon les revendications 1 à 4, caractérisé en ce que les composants (A) et (B) sont mis en oeuvre dans un rapport de 95-60% en poids du composant (A) pour 5-40% en poids du composant (B).

7. Utilisation des liants préparés selon les revendications 1 à 6 pour la formulation, notamment de produits de revêtement appropriés au procédé de peinture électrophorétique.

8. Procédé pour la préparation de produits de revêtement à partir des liants préparés selon les revendications 1 à 6, caractérisé en ce que l'on utilise le composant (B) comme milieu pour la préparation de la pâte pigmentaire et que l'on met en oeuvre le composant (A) en tant que peinture transparente pour compléter le produit de revêtement.